# FASCICULE DE BREVET EUROPEEN

(11) **EP 0 515 343 B1**
(45) Date de publication et mention de la délivrance du brevet: **29.01.1997**
(21) Numéro de dépôt: 92870073.1
(22) Date de dépôt: 20.05.1992
(51) Int. Cl.: B60L 11/18

(54) **Dispositif d'entrainement électrique d'un véhicule roulant et véhicule automobile équipé d'un tel dispositif**
Elektrische Antriebsvorrichtung eines Fahrzeugs und mit einer derartigen Vorrichtung ausgerüstetes Kraftfahrzeug
Electrical driving device for a vehicle and motor vehicle provided with such a device

(30) Priorité: 23.05.1991 FR 9106257
(43) Date de publication de la demande: 25.11.1992
(73) Titulaire: Rudelle, Léonce, F-81350 Valderies (FR)
(72) Inventeur: Rudelle, Léonce, F-81350 Valderies (FR)
(74) Mandataire: Vanderperre, Robert

(56) Documents cités:
- DE-A- 2 727 041
- FR-A- 1 216 775
- GB-A- 1 432 348
- US-A- 3 736 482
- US-A- 4 125 797

## Description

La présente invention a trait au domaine de l'automobile et concerne plus particulièrement les véhicules terrestres roulants propulsés à l'aide d'une énergie électrique.

L'invention porte plus précisément sur le dispositif d'entraînement électrique nécessaire à la propulsion du véhicule, du type de celui comportant un sous-ensemble de motorisation électrique qui, alimente par un sous-ensemble d'alimentation en énergie électrique continue et asservi par un sous-ensemble de commande à régulation électrique, est couplé avec le train de roulement via une boîte de vitesses, un embrayage et une transmission secondaire.

En effet, dans la mise au point de son dispositif d'entraînement électrique pour véhicule automobile, le demandeur a surtout cherché à conserver la souplesse de conduite des véhicules équipés auparavant d'un moteur thermique, notamment en maintenant en place la boîte de vitesses avec son embrayage et sa transmission secondaire. Ainsi, pour des raisons de rentabilité évidente, il est facile d'intégrer le sous-ensemble de motorisation électrique de l'invention dans une chaîne de fabrication des modèles de véhicules classiques équipés d'un moteur thermique, puisque ce dernier est simplement remplacé par un sous-ensemble de motorisation électrique dont les avantages (silence de fonctionnement, faible consommation d'énergie, facilité d'entretien, absence de pollution, etc...) ne seront pas rappelés dans le présent mémoire car son intérêt manifeste d'utilisation pour suppléer le moteur thermique a déjà été soulevé par les utilisateurs et les pouvoirs publics, depuis déjà plusieurs décennies.

Le mode électrique de traction autonome d'un véhicule automobile, souffre à ce jour de nombreux problèmes et parmi ceux-ci :
- une vitesse et une puissance d'avancement relativement limitées,
- une énergie massique des batteries insuffisante,
- une autonomie de fonctionnement très faible,
- etc...

Dans le brevet américain n° 3.736.482, il est proposé un dispositif d'entraînement électrique comportant un sous-ensemble de motorisation électrique constitué notamment d'un moteur dit "compound" avec un enroulement d'excitation série et un enroulement d'excitation parallèle, branchés tous deux entre un sous-ensemble de commande à régulation électrique comportant deux rhéostats réglables installés sur les circuits d'alimentation de l'enroulement d'excitation série et de l'enroulement d'excitation parallèle et un sous-ensemble d'alimentation en énergie électrique continue, lequel peut être constitué par une série de batteries d'accumulateurs. Un tel dispositif utilise classiquement les avantages du moteur "compound" car il permet ainsi d'adapter le couple moteur avec la vitesse de rotation du rotor, progressivement pendant les phases de démarrage, d'accélération, de décélération, de freinage, de marche arrière du véhicule, et ce par un ajustement conjugué des champs magnétiques qu'engendre le stator grâce aux deux enroulements d'excitations série et parallèle.

Le brevet allemand n° 2727041 propose un moteur "compound" dont l'enroulement d'excitation série est contrôlé par une diode montée en parallèle sur le rhéostat réglable installé sur le circuit d'alimentation dudit enroulement. La disposition de cette diode et de ce rhéostat réglable permet de faire chuter la tension assurant une modulation souple et progressive de la vitesse du rotor, nécessaire notamment au démarrage du véhicule.

Le demandeur a donc mené des recherches basées sur deux principes fondamentaux : la simplicité de mise en oeuvre et l'autonomie de fonctionnement pour l'adaptabilité sur tout véhicule automobile. Ses recherches ont abouti notamment sur la conception originale d'un sous-ensemble de commande à régulation électrique du dispositif d'entraînement électrique pour la propulsion d'un véhicule automobile, entraînement du type de celui comprenant un sous-ensemble de motorisation électrique couplé avec le train de roulement, via une mécanique classique - boîte de vitesses - embrayage - transmission secondaire.

Partant de la constatation que, lorsque le véhicule amorce une descente, une décélération ou un freinage, et ce, quelle que soit la vitesse de rotation du rotor, l'adoption d'un moteur "compound" dans le dispositif d'entraînement électrique d'un véhicule automobile a le grand avantage de fournir une force contre-électromotrice lorsque le même moteur travaille en générateur de courant, il a imaginé d'assurer une recharge automatique des accumulateurs du sous-ensemble d'alimentation en énergie électrique continue pour améliorer l'autonomie de fonctionnement.

Suivant l'invention, le sous-ensemble de commande à régulation électrique du type de celui comportant :
- un premier rhéostat réglable installé sur le circuit d'alimentation dudit enroulement d'excitation série du sous-ensemble de motorisation permettant de faire chuter la tension aux bornes dudit enroulement à des fins de modulation de la vitesse de rotation du rotor du moteur nécessaire au démarrage,
- et un deuxième rhéostat réglable installé sur le circuit d'alimentation dudit enroulement d'excitation parallèle du sous-ensemble de motorisation permettant de faire varier l'intensité du champ magnétique dans ledit enroulement à des fins de modulation du couple-moteur et de la vitesse du rotor du moteur après la phase de démarrage,
est remarquable en ce que le susdit sous-ensemble de commande à régulation électrique comporte deux diodes disposées "tête-bêche", la première étant interposée entre l'enroulement d'excitation série du sous-ensemble de motorisation et le premier rhéostat, la deuxième étant disposée sur un circuit parallèle de celui composé par la première diode, le premier rhéostat et l'enroulement d'excitation série, de manière à shunter ces deux derniers et à autoriser le passage direct du courant de charge vers les accumulateurs des batteries du sous-ensemble d'alimentation en énergie continue, dès que le sous-ensemble de motorisation électrique fournit une force contre-électromotrice.

Ainsi, l'une de ces diodes est interposée entre l'enroulement d'excitation série et le rhéostat et la deuxième diode est installée sur un circuit parallèle à celui composé par la première diode associée au premier rhéostat et l'enroulement d'excitation série, disposition totalement différente de celle décrite dans le brevet allemand n° 2727041 où la seule diode est montée uniquement en parallèle sur l'enroulement d'excitation série.

Une unité de traitement électronique sera judicieusement mise en place par un homme de métier dans le sous-ensemble de commande à régulation électrique pour asservir automatiquement les deux couples développés dans les deux enroulements d'excitation série et d'excitation parallèle.

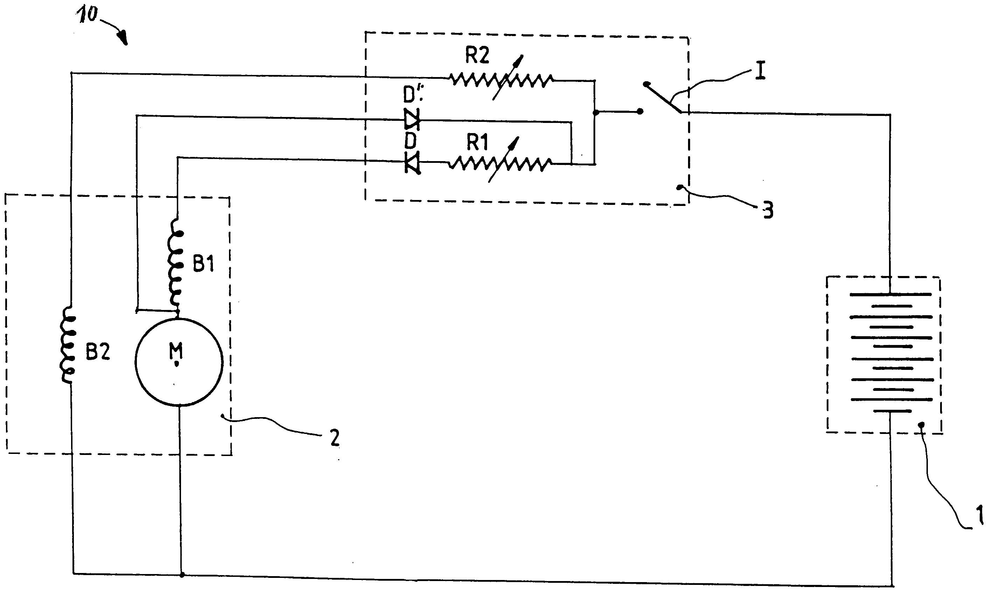

Bien que les aspects principaux de l'invention considérés comme nouveaux aient été exprimés ci-dessus, de plus amples détails concernant un mode de réalisation préférée d'un dispositif d'entraînement électrique pour véhicule propulsé électriquement, respectant les concepts fondamentaux de l'invention, seront mieux compris en se référant à la description ci-après et au dessin l'accompagnant illustrant ce mode de réalisation.

La figure portée par ce dessin est une représentation d'une forme de cablage électrique d'un tel dispositif d'entraînement électrique.

Comme illustré sur ce dessin, le schéma de câblage électrique d'un dispositif d'entraînement électrique référence 10 dans son ensemble, est destiné à assurer la propulsion d'un véhicule automobile. A cet effet, il comporte :
- un sous-ensemble d'alimentation en énergie électrique continue 1,
- un sous-ensemble de motorisation 2 destiné à transformer l'énergie électrique continue du sous-ensemble d'alimentation 1 en une énergie mécanique qui sera transmise au train de roulement du véhicule automobile,
- un sous-ensemble de commande 3 qui, disposé entre le sous-ensemble d'alimentation 1 et le sous-ensemble de motorisation 2, est constitué d'un dispositif de commande à régulation électrique des deux sous-ensembles 1 et 2.

Le sous-ensemble d'alimentation en énergie électrique continue 1 est constitué notamment par une série de vingt batteries de 12 volts pour fournir en sortie un courant continu de 240 volts. Une quantité de vingt batteries d'accumulateurs a été déterminée arbitrairement par le demandeur pour fournir au départ une énergie nécessaire au sous-ensemble de motorisation électrique 2 pendant la phase de démarrage, tout en assurant une plus grande autonomie de fonctionnement dudit sous-ensemble pendant la phase post-démarrage.

Le sous-ensemble de motorisation électrique 2 se compose notamment d'un moteur électrique M constitué classiquement d'un rotor dont l'arbre de sortie est couplé sur la transmission secondaire du véhicule automobile, lequel rotor est animé en rotation par un stator sur lequel sont branchés un enroulement d'excitation série B1 et un enroulement d'excitation parallèle B2, pour constituer un moteur dit "compound", originalité première de l'invention. L'enroulement d'excitation série B1 est connecté à sa borne d'entrée au sous-ensemble de commande à régulation électrique 3 et à sa borne de sortie à la borne d'entrée du moteur M. L'enroulement d'excitation parallèle B2 est connecte au niveau de sa borne d'entrée au sous-ensemble de commande de régulation électrique 3 et à sa borne de sortie sur la borne de sortie du moteur M, lesquelles bornes de sortie sont toutes deux reliées au sous-ensemble d'alimentation en énergie électrique 1.

Selon l'invention, le dispositif de commande à régulation électrique comporte deux rhéostats réglables R1 et R2 connectés, le premier entre la borne d'entrée de l'enroulement d'excitation série B1 et le sous-ensemble d'alimentation 1, et le second entre la borne d'entrée de l'enroulement d'excitation parallèle B2 et le sous-ensemble d'alimentation 1. Le premier rhéostat R1 a pour objet notamment de faire chuter la tension aux bornes du moteur M, de manière à réduire la vitesse de rotation de son rotor, pendant la phase dite de démarrage du véhicule automobile, pour obtenir une accélération souple et progressive de ce dernier. Le deuxième rhéostat R2 a, quant à lui, pour rôle de faire varier l'intensité du champ magnétique engendré dans l'enroulement d'excitation parallèle B2, afin de pouvoir automoduler le couple du moteur M et la vitesse de son rotor, une fois la phase de démarrage engagée.

Une unité de traitement électronique non représentée sera facilement intégrée par un homme de métier dans le sous-ensemble de commande à régulation électrique 3, pour assumer un enchaînement automatique des réglages des rhéostats destinés à conjuguer les champs magnétiques dans les enroulements d'excitation série B1 et d'excitation parallèle 2, dans le but d'adapter les couples et la vitesse de rotation du rotor en fonction des efforts demandés par l'arbre de transmission du véhicule automobile selon la vitesse de ce dernier et la pente du chemin de roulement.

Selon une particularité particulièrement avantageuse de l'invention, le susdit sous-ensemble de commande à régulation électrique 3 comporte deux diodes D et D' disposées en "tête-bêche". La première D est interposée entre l'enroulement d'excitation série B1 et le premier rhéostat R1 alors que la seconde diode D' est disposée sur un circuit parallèle à celui constitué par le rhéostat R1, la première diode D et l'enroulement d'excitation série B1. Cette prédisposition des deux diodes tête-bêche D et D' a le grand avantage de shunter le rhéostat R1 et l'enroulement B1, dés que le moteur M fournit une force contre-électromotrice destinée à fournir un courant de charge vers les accumulateurs des batteries du sous-ensemble d'alimentation 1, lorque le moteur tourne plus vite sous l'effet d'une force d'inertie supplémentaire fournie pendant les phases de descente, de décélération et de freinage du véhicule automobile. En outre, le fait de shunter l'enroulement d'excitation série B1 lors d'une production de force contre-électromotrice, évite une désexcitation dans ledit enroulement B1 et un emballement incontrôlé du moteur M.

D'autre part, les entrées des rhéostats R1 et R2 sont connectées ensemble à la source d'alimentation électrique 1, via un interrupteur I qui, commandé manuellement par le conducteur, est destiné à interrompre et/ou à rétablir le courant dans le circuit électrique de l'ensemble du dispositif d'entraînement électrique 10.

Le fonctionnement du dispositif d'entraînement électrique pour véhicule automobile tel que décrit ci-dessus est le suivant.

Dans la phase de démarrage, le conducteur met le contact en rétablissant le circuit grâce à l'interrupteur I, puis agit sur le rhéostat R1 pour engendrer dans l'enroulement d'excitation série B1, un champ magnétique fournissant une vitesse du rotor progressivement accélérée.

Une fois le moteur M démarré, il agit alors sur le rhéostat R2 pour moduler l'intensité du champ magnétique induit dans l'enroulement d'excitation parallèle B2, qui s'automodule avec le champ magnétique induit dans l'enroulement d'excitation série B1, pour augmenter ou réduire la vitesse de rotation du rotor R.

Lorsque le moteur M produit une force contre-électromotrice, la deuxième diode D' permet de courcircuiter l'enroulement d'excitation série B1 et le premier rhéostat R1, de manière à fournir directement un courant de charge aux accumulateurs du sous-ensemble d'alimentation 1, tout en permettant à ce dernier de maintenir les alimentations en énergie nécessaires à l'automodulation des enroulements B1 et B2, pour éviter que le moteur M ne s'emballe.

Comme indiqué au début du présent mémoire, le sous-ensemble d'alimentation en énergie électrique 1 sera judicieusement composé de vingt batteries de 12 volts chacune pour fournir l'énergie et l'autonomie nécessaires au fonctionnement du sous-ensemble de motorisation 2 d'un véhicule automobile.

On comprend que le dispositif d'entraînement électrique 10, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention tel que défini par les revendications.

Afin de permettre une meilleure compréhension du dessin, une liste des références avec leurs légendes est ci-après énumérée.
- 10: Dispositif d'entraînement électrique
- 1: Sous-ensemble d'alimentation d'énergie électrique
- 2: Sous-ensemble de motorisation électrique
- B1: Enroulement d'excitation série du sous-ensemble 2,
- B2: Enroulement d'excitation parallèle du sous-ensemble 2
- M: Moteur avec stator et rotor,
- 3: Sous-ensemble de commande à régulation électrique
- R1: Premier rhéostat réglable
- R2: Deuxième rhéostat réglable
- D,D': Diodes disposées en tête-bêche
- I: Interrupteur

## Revendications

1. Dispositif d'entraînement électrique d'un véhicule automobile roulant, du type de celui comportant un sous-ensemble de motorisation électrique (2) se composant d'un moteur (M) dit "compound" avec un enroulement d'excitation série (B1) et un enroulement d'excitation parallèle (B2), alimenté par un sous-ensemble d'alimentation en énergie électrique continue (1) et asservi par un sous-ensemble de commande à régulation électrique (3) lequel moteur couplé avec le train de roulement du véhicule, via une boîte de vitesses, un embrayage et une transmission secondaire comporte :
- un premier rhéostat réglable (R1) installé sur le circuit d'alimentation dudit enroulement d'excitation série (B1) du sous-ensemble de motorisation (2) permettant de faire chuter la tension aux bornes dudit enroulement à des fins de modulation de la vitesse de rotation du rotor du moteur (M) nécessaire au démarrage,
- et un deuxième rhéostat réglable (R2) installé sur le circuit d'alimentation dudit enroulement d'excitation parallèle (B2) du sous-ensemble de motorisation (2) permettant de faire varier l'intensité du champ magnétique dans ledit enroulement à des fins de modulation du couple-moteur et de la vitesse du rotor du moteur (M) après la phase de démarrage, caractérisé par le fait que le susdit sous-ensemble de commande à régulation électrique (3) comporte deux diodes (D et D') disposées "tête-bêche", la première étant interposée entre l'enroulement d'excitation série (B1) du sous-ensemble de motorisation (2) et le premier rhéostat (R1), la deuxième (D') étant disposée sur un circuit parallèle de celui composé par la première diode (D), le premier rhéostat (R1) et l'enroulement d'excitation série (B1), de manière à shunter ces deux derniers et à autoriser le passage direct du courant de charge vers les accumulateurs des batteries du sous-ensemble d'alimentation en énergie continue (1), dès que le sous-ensemble de motorisation électrique (2) fournit une force contre-électromotrice.

2. Véhicule automobile équipé du dispositif d'entraînement électrique selon la revendication 1, caractérisé par le fait que ledit dispositif d'entraînement électrique, couplé avec le train de roulement du véhicule, via une boite de vitesses, un embrayage et une transmission secondaire avec un sous-ensemble d'alimentation en énergie électrique continue (1) comprend vingt batteries de 12 volts couplés en série pour fournir une tension de sortie de 240 volts.

## Claims

1. An electrical driving unit for rolling motor vehicles, of the kind comprising an electrically motorised subassembly (2) made up of a motor (M) said "coumpound" with a series excitation winding (B1) and a parallel excitation winding (B2), said motor being fed by a direct current supply subassembly (1) and controlled by an electrically regulated control subassembly (3), said motor being connected to the vehicle running carriage via a gear box, clutch and secondary transmission, comprises:
- a first adjustable rheostat (R1) installed on the feed circuit of said series excitation winding (B1) of the motorised subassembly (2) allowing for a drop in voltage at the terminals of said series excitation winding (B1) in order to modulate the rotor speed of the motor (M) which is necessary to start.,
- and second adjustable rheostat (R2) installed on the feed circuit of said parallel excitation winding (B2) of the motorised subassembly (2) allowing for a variation in intensity of the magnetic field of said winding (B2) in order to modulate the driving torque and speed of the rotor of the motor (M) after the startup stage, CHARACTERISED IN THAT the said electrically regulated control subassembly (3) comprises two diodes ( D and D')arranged in a top to bottom, contiguous manner, the first one (D) being placed between the series excitation winding (B1) of the motorised subassembly (2) and the first rheostat (R1), the second one (D') being placed on a circuit parallel to the one formed by the first diode (D), the first rheostat (R1) and the series excitation winding (B1), in order to shunt the last two and to allow a direct passage of the loading current towards the battery accumulators of the direct current supply subassembly (1), as soon as the electrically motorised subassembly (2) provides a counter-electromotive force.

2. Motor vehicle provided with the electrical driving unit according to claim 1, CHARACTERISED IN THAT the said electrical driving unit, connected to the vehicle running carriage via a gear box, clutch and secondary transmission with said current supply subassembly (1) comprises twenty 12-volt batteries connected in series to supply a 240-volt output tension.

## Patentansprüche

1. Elektrischer Antrieb eines rollenden Kraftfahrzeugs mit einer Unterbaugruppe (2) zur elektrischen Motorisierung bestehend aus einem "Kompound" genannten Motor mit einer seriengeschalteten Feldwicklung (B1) und einer parallelgeschalteten Feldwicklung (B2), gespeist durch eine Unterbaugruppe (1) zur Versorgung mit elektrischer Gleichstromenergie und geregelt durch eine Steuerungsunterbaugruppe mit elektrischer Regulierung (3), wobei der Motor mit dem Laufwerk des Fahrzeugs durch ein Getriebe, eine Kupplung und ein nachgeschaltetes Getriebe gekoppelt ist und aus:
- einem ersten regelbaren Rheostat (R1) besteht, das auf dem Speisestromkreis der Feldwicklung in Serie (B1) der Unterbaugruppe zur Motorisierung (2) installiert ist, wodurch die Spannung an den Klemmen dieser Feldwicklung zum Abfallen gebracht wird, um die Drehgeschwindigkeit des Motorläufers (M) für das Anfahren zu modulieren,
- und aus einem zweiten regelbaren Rheostat (R2), das auf dem Speisestromkreis der parallelen Feldwicklung (B2) der Unterbaugruppe zur Motorisierung (2) installiert ist, um die Intensität des Magnetfeldes in dieser Feldwicklung zu variieren mit dem Ziel, das Motordrehmoment und die Geschwindigkeit des Motorläufers (M) nach dem Anfahren zu modulieren, dadurch gekennzeichnet, daß die oben erwähnte Steuerungsunterbaugruppe mit elektrischer Regulierung (3) zwei Dioden (D und D') enthält, die gegenparallel angeordnet sind, wobei sich die erste zwischen der Feldwicklung in Serie (B1) der Unterbaugruppe zur Motorisierung (2) und dem ersten Rheostat (R1) befindet und die zweite (D') auf einem parallelen Stromkreis zu dem, der von der ersten Diode (D), dem ersten Rheostat (R1) und der Feldwicklung in Serie (B1) gebildet wird, um diese beiden letztgenannten zu überbrücken und den direkten Stromfluß des Ladestroms zu den Akkumulatoren der Batterien der Unterbaugruppe zur Versorgung mit elektrischer Gleichstromenergie (1) zu ermöglichen, sobald die Unterbaugruppe zur elektrischen Motorisierung (2) eine gegenelektromotorische Kraft liefert.

2. Kraftfahrzeug mit einem elektrischen Antrieb nach Anspruch 1, dadurch gekennzeichnet, daß dieser elektrische Antrieb, der mit dem Laufwerk des Fahrzeugs durch ein Getriebe, eine Kupplung und ein nachgeschaltetes Getriebe mit einer Unterbaugruppe (1) zur Versorgung mit elektrischer Gleichstromenergie gekoppelt ist, 20 12V-Batterien enthält, die in Serie gekoppelt sind, um eine Ausgangsspannung von 240 Volt zu liefern.
